# FASCICULE DE BREVET EUROPEEN

(11) **EP 1 123 241 B1**
(45) Date de publication et mention de la délivrance du brevet: **12.03.2003**
(21) Numéro de dépôt: 99949061.8
(22) Date de dépôt: 18.10.1999
(51) Int. Cl.: B65D 35/12, B29C 45/16, B29D 23/20

(54) **TUBE A TETE EN MATERIAUX MULTICOUCHES, ET PROCEDE ET DISPOSITIF DE FABRICATION**
TUBE MIT MEHRSCHICHTIGEM TUBENKOPF SOWIE VERFAHREN VORRICHTUNG ZU DESSEN HERSTELLUNG
TUBE WITH MULTILAYER HEAD AND METHOD AND DEVICE FOR MAKING SAME

(30) Priorité: 19.10.1998 FR 9813223
(43) Date de publication de la demande: 16.08.2001
(73) Titulaire: CEBAL S.A., F-92115 Clichy (FR)
(72) Inventeur: MEAUSOONE, Jean-Paul, F-51100 Reims (FR); BOSSHARDT, Michel, F-51800 Sainte-Menehould (FR); LAPALUS, Roger, F-51800 Sainte-Menehould (FR)
(74) Mandataire: Pigasse, Daniel
(86) Numéro de dépôt international: FR9902525
(87) Numéro de publication internationale: WO00023340

(56) Documents cités:
- EP-A- 0 325 440
- WO-A-98/41378
- DE-C- 4 404 970
- DE-U- 8 407 074
- GB-A- 1 384 434
- US-A- 3 962 006
- US-A- 4 526 821
- US-A- 4 743 479
- US-A- 5 141 695
- US-A- 5 292 034
- PATENT ABSTRACTS OF JAPAN vol. 017, no. 694 (M-1531), 17 décembre 1993 (1993-12-17) & JP 05 237866 A (TOYO MACH & METAL CO LTD), 17 septembre 1993 (1993-09-17)

## Description

### DOMAINE DE L'INVENTION

L'invention concerne le domaine des tubes en matière plastique, plus particulièrement le domaine des tubes dotés de propriétés barrière, typiquement celui des tubes dentifrice.

### ETAT DE LA TECHNIQUE

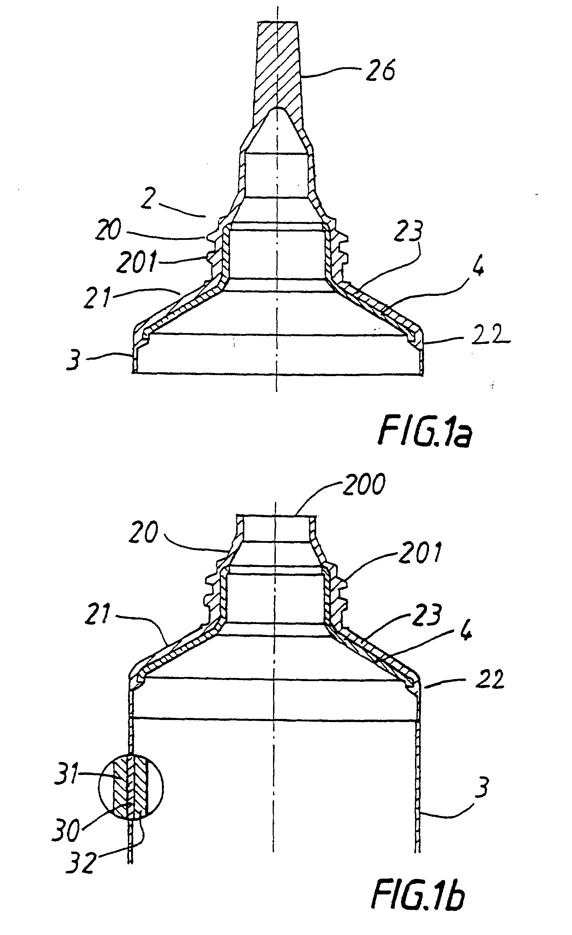

On connaît, par le brevet européen EP-B-0524 897 au nom de la demanderesse, un procédé de fabrication de tubes dans lequel, afin notamment d'améliorer l'effet barrière des têtes de tubes, on prépare d'abord, à part et par thermoformage, une pièce monobloc ou insert en matériau multicouches à 5 couches PE/Adh/EVOH/Adh/PE, où " PE " désigne une couche de polyéthylène, où " EVOH " désigne une couche à effet barrière de copolymère éthylène-alcool vinylique, " Adh " désigne une couche adhésive pour assurer la cohésion entre les couches de PE et celle d'EVOH.
Ensuite, on place sur un poinçon d'un outil de surmoulage une jupe de tube ainsi que ledit insert, les deux étant fabriqués à part, puis on surmoule la tête en PE pour obtenir un tube comme représenté à la figure 1.

On connaît aussi par les documents AU-0545 604 et EP-A-0130 239 d'autres procédés de fabrication de tubes comprenant l'utilisation d'inserts, typiquement en PBT (polybutylènetéréphtalate), fabriqués séparément par moulage.

Enfin, on connaît, par le document BE-A-666 719, un tube dont la tête comprend comme matériau barrière un insert tronconique formé de feuille mince d'aluminium plissée.

### PROBLEMES POSES

Les problèmes posés par les tubes connus par l'état de la technique sont de différents ordres, compte tenu de l'utilisation d'inserts fabriqués à part :
- d'une part, la fabrication d'un insert à part, en particulier dans le cas d'un insert à 5 couches, comme décrit dans le document EP EP-B-0524 897, est une opération complémentaire dont le coût de fabrication se rajoute à celui d'un tube identique, mais dépourvu d'insert, sans compter le coût d'assemblage de l'insert proprement dit et l'augmentation de la complexité des machines d'assemblage,
- d'autre part, les inserts constituent des matériaux barrière, donc de nature différente du PE. Comme ils sont fabriqués à part, qu'ils représentent un pourcentage pondéral non négligeable du tube, et que les matériaux de l'insert, en particulier le PBT, ne sont pas miscibles dans le PE qui constitue le matériau typique des tubes, il y a un problème de recyclage des matériaux constituant les tubes,
- enfin, les inserts posent souvent un problème de barrière, soit parce que les propriétés barrière intrinsèques du matériau barrière sont insuffisantes, soit parce qu'il existe une trop large bande annulaire à la zone de raccordement de la jupe et de la tête.
Les têtes et tubes selon l'invention permettent de résoudre simultanément l'ensemble de ces problèmes.

### DESCRIPTION DE L'INVENTION

Selon un premier objet de l'invention, la tête de tube en matière plastique, destinée à être assemblée à une jupe pour former un tube, comprenant un goulot, typiquement fileté, et un épaulement comprenant une portion annulaire de raccordement à ladite jupe, est caractérisée en ce que,
a) ladite tête est formée par co-injection et comprend un matériau multicouche comprenant une couche intérieure, une couche extérieure en matériau de structure, typiquement en polyoléfine, et au moins une couche interne en un matériau barrière thermoplastique,
b) ladite couche interne est enrobée par lesdites couches intérieure et extérieure, y compris aux extrémités de ladite tête où lesdites couches intérieure et extérieure sont réunies en une couche, typiquement polyoléfinique, la distance entre chacune des extrémités " e " et " e' " de ladite couche interne et l'extrémité correspondante de ladite tête étant comprise entre 0,02 mm et 5 mm, et de préférence inférieure à 3 mm, de manière à ce que ladite couche interne en un matériau barrière s'étende sur la plus grande hauteur possible, tout en ayant ses extrémités enrobées ou encapsulées par la jonction desdites couches intérieure et extérieure.

L'invention correspond à un changement radical dans le conception de ladite tête, en ce sens que, d'une part, ladite couche interne B est totalement immergée et enrobée par une matière A dite de structure, typiquement une polyoléfine - mais ce peut être aussi une autre matière extrudable, telle que un PET ou un PA - sans discontinuité ou coupure de flux de matière comme c'est le cas avec l'utilisation d'un insert de l'état de la technique, et en ce sens que, d'autre part, ladite couche interne peut s'étendre et se prolonger aussi loin que souhaité et aussi près des extrémités de ladite tête, la seule limité étant que cette couche ne soit pas en contact avec l'extérieur et reste enrobée par la matière de structure A.

Comme il n'y a pas d'insert, ni de pièce rapportée, le tube selon l'invention présente plusieurs avantages importants pour l'homme du métier, sur le plan du coût, celui de la compatibilité de matériaux de tête et de jupe, et donc du recyclage, car typiquement un insert est en PBT, matériau unique que l'on ne retrouve pas dans la jupe, et celui de l'adaptation de la performance de la tête aux besoins, sachant que tous les produits conditionnés ne présentent pas les mêmes exigences en ce qui concerne le niveau de l'imperméabilité de la tête, et donc que l'on peut moduler la nature de la couche barrière et son épaisseur, et par là obtenir à la fois des tubes adaptés aux besoins et au moindre coût.

Ladite couche barrière peut être formée d'une ou de plusieurs couches qui se recouvrent au moins partiellement.

### DESCRIPTION DES FIGURES

Les figures 1a et 1b sont des vues en coupe axiale d'une tête (2) de tube selon l'état de la technique doté d'un insert (4). Cette tête comprend un goulot (20) doté d'un filetage (201) et un épaulement (21) de raccordement à une jupe (3).
La figure la représente une vue d'une tête (2) munie de sa carotte d'injection (26) en sortie du poste de surmoulage de la tête (2) sur la jupe (3).
La figure 1b correspond à la tête de tube (2) de la figure la après élimination de la carotte d'injection (26), et formation de l'orifice (200).
On a représenté sur la figure 1b une vue agrandie en coupe de la jupe (3) qui comprend typiquement une couche (30) en matériau barrière B recouverte d'une couche externe (31) et d'une couche interne (32) en matériau de structure A.

Les figures 2a et 2b sont analogues aux figures 1a et 1b et correspondent à l'invention. Le matériau formant la tête (2) comprend une couche interne en matériau barrière B (25) recouverte extérieurement d'une couche externe (23) et intérieurement d'une couche interne (24) de matériau de structure A.
Sur la figure 2b, sont portées les distances, notées " e " et " e' ", entre les extrémités de ladite couche interne (24) et les extrémités de la tête.

La figure 3 est une vue en coupe verticale d'une buse (5) de co-injection d'axe de symétrie (10) vertical présentant un canal central (50), un canal annulaire externe (52) pour l'injection du matériau A, un canal annulaire médian (51) pour l'injection de matériau barrière B, et un orifice commun de sortie (53).

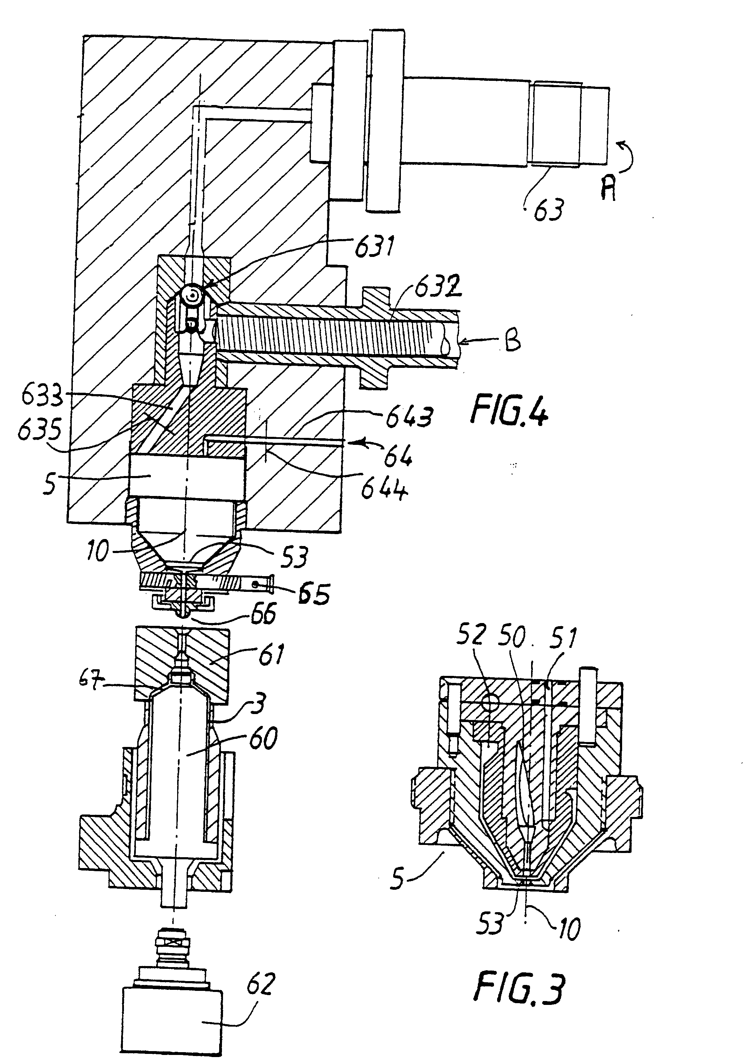

La figure 4 est une vue schématique, selon une coupe verticale, d'un dispositif unitaire de co-injection. Ce dispositif comprend une buse (5) alimentée d'une part en matériau A (typiquement du PE) par un dispositif d'injection de matériau A comprenant en amont un canal d'alimentation (633) muni d'une vanne ou tiroir de fermeture (635), un piston doseur (632) alimenté en matériau A depuis une extrudeuse (63) et doté d'un clapet anti-retour (631), et alimentée d'autre part en matériau barrière B grâce à un dispositif d'injection de matériau barrière B comprenant un canal d'alimentation (643) muni d'une vanne ou tiroir de fermeture (644), et, en amont, une extrudeuse de matériau barrière B (64).
La buse (5) comprend un obturateur (65) de son orifice commun (53) et se termine par un orifice externe (66) coopérant avec l'outillage de moulage de la tête (2) par injection. La buse pourrait comprendre un moyen d'obturation axial (non représenté), typiquement à tiroir, permettant d'obturer la sortie du matériau A, celle du matériau B ou à la fois celle des matériaux A et B.
L'outillage de moulage comprend typiquement une matrice (61), un poinçon (60) sur lequel a été placée une jupe (3) de tube, l'espace entre matrice et poinçon formant la cavité (67) dans laquelle sera formée ladite tête (2) par co-injection. Un piston (62) permet d'appliquer avec une pression suffisante l'ensemble poinçon et matrice contre ledit orifice externe (66) en vue de l'injection de ladite tête (2).
Sur cette figure, les répartiteurs de matériau A et de matériau B, en vue de fabriquer simultanément plusieurs têtes de tubes n'ont pas été représentés.

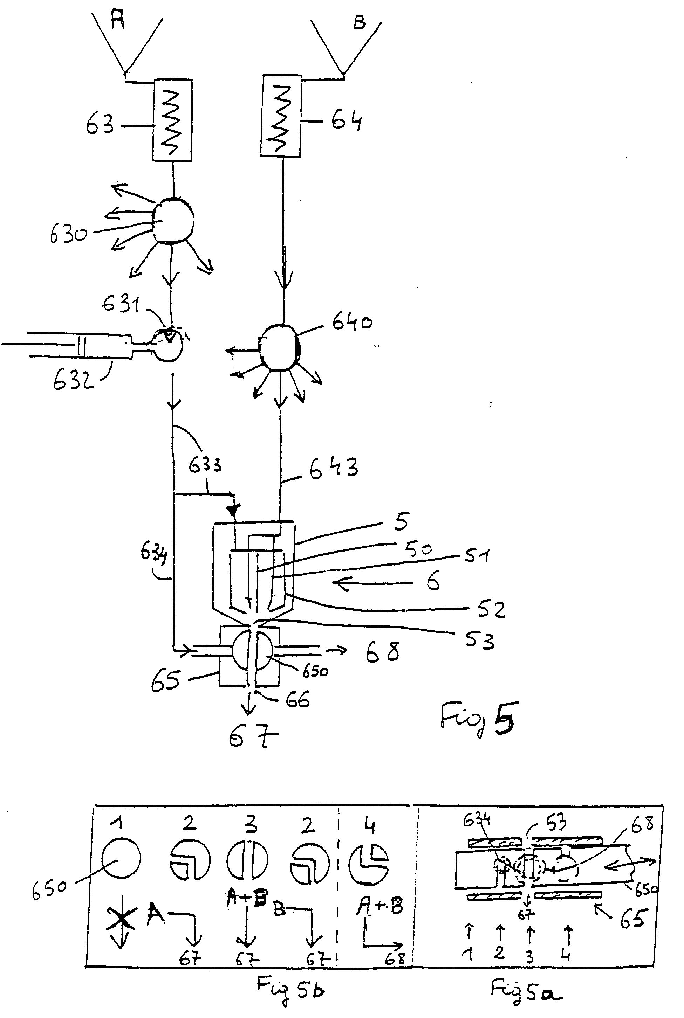

Les figures 5 à 6 représentent une autre modalité de procédé et de dispositif selon l'invention.
La figure 5 est un schéma de principe en coupe axiale d'un dispositif de co-injection de matériau de structure A (sur la partie gauche de la figure) et de matériau barrière B (sur la partie droite de la figure). Sur cette figure, les répartiteurs de matériau A (630) et de matériau B (640), destinés à alimenter 6 cavités (67) simultanément, ont été représentés. Le circuit d'alimentation en matériau A comprend un piston d'injection (632) et un clapet anti-retour (631) qui permet d'alimenter la tête de co-injection (6) en matériau A avec le débit et la pression désirées.
Le dispositif comprend une vanne à tiroir (65) avec un tiroir (650) à 4 positions par déplacement latéral du tiroir (650), qui est alimentée soit en matériau multicouche de A et B par l'orifice (53) de la buse (5), soit en matériau A seul par le canal latéral de matériau A (634), et qui débouche soit sur la cavité (67), soit vers une purge (68).
Le tiroir (650) est représenté en coupe transversale sur les figures 5 et 5b, et en coupe longitudinale sur la figure 5a, où sont représentées les 4 positions :
- position 1 : le tiroir est plein, de sorte qu'aucune des arrivées (53,634) et aucune des sorties vers la cavité (67) ou la purge (68) n'est en communication,
- position 2 : l'arrivée de matériau A (634) est mise en communication avec la cavité (67), l'arrivée de matériau multicouche A et B par l'orifice (53) étant obturée,
- position 3 : l'arrivée de matériau multicouche A et B par l'orifice (53) de la buse (5) est mise en communication avec la cavité (67), l'arrivée de matériau A (634) étant obturée,
- position 4 : l'arrivée de matériau multicouche A et B par l'orifice (53) de la buse (5) est mise en communication avec la purge (68), position qui est typiquement utilisée non dans le cycle de production, mais en cas d'arrêt dudit dispositif, avant le redémarrage du cycle de production.

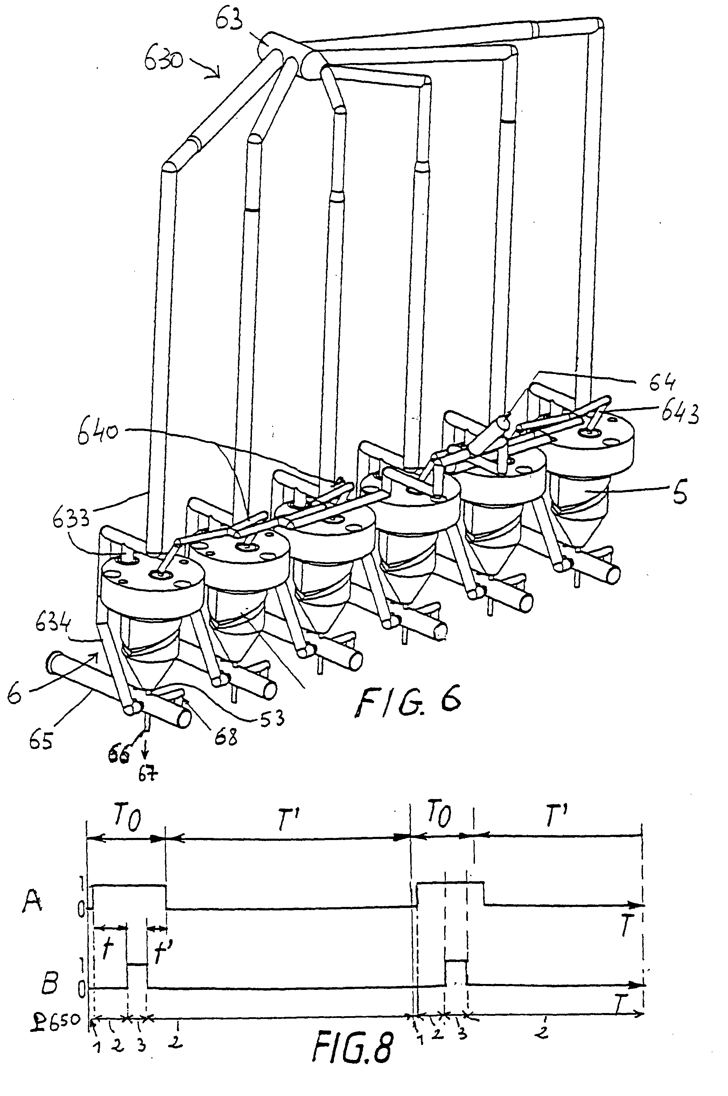

La figure 6 est une vue en perspective des répartiteurs de matériau A (630) et de matériau B (640), alimentés respectivement par les extrudeuses de matériau A (63) et de matériau B (64), et alimentant les 6 têtes de co-injection (6) chacune comprenant une buse (5) et un canal latéral (634) constituant les deux entrées de la vanne à tiroir (65). On n'a pas représenté sur cette figure les 6 pistons d'injection de matériau A (632).
Sur cette figure apparaissent la disposition des vannes à tiroir (65), chacune présentant deux « entrées » ou alimentations (53) et (634) et deux « sorties » (66) vers la cavité (67) et (68) vers la purge, ces « entrées » et ces « sorties » formant une croix dans un plan perpendiculaire à l'axe de la vanne (65).

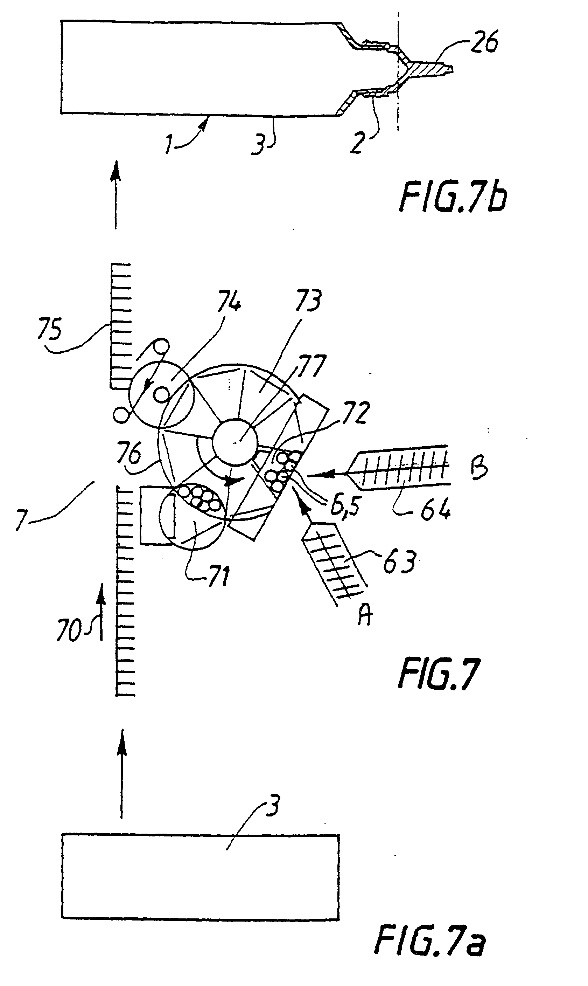

La figure 7 est une vue schématique de dessus d'une unité de fabrication de tubes à 6 buses d'injection (5).

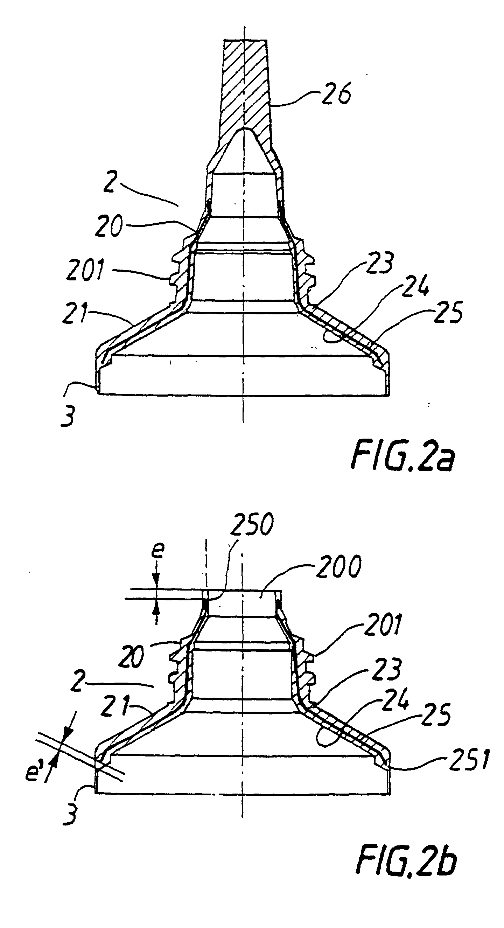

La figure 7a schématise en coupe une jupe (3), et la figure 7b un tube en sortie de co-injection, avec une tête correspondant à la figure 2a.

La figure 8 illustre de manière schématique le déroulement d'un cycle d'injection, d'une durée totale de To+T', l'injection de matériau de structure A (typiquement une polyoléfine de type PE), via la vanne (635), allant du temps T=0 à T=To, alors que l'injection de matériaux barrière B, via la vanne ou tiroir (645), démarre au temps T=t et se termine au temps T=To-t', la durée T' étant un temps de stabilisation.
On a porté sur l'axe noté « P650 », la position du tiroir (650) quand le dispositif utilisé comprend ce type de tiroir à 4 positions notées de 1 à 4, comme indiqué à propos des figures 5a et 5b.

### DESCRIPTION DETAILLEE DE L'INVENTION

Dans la tête (2) de tube (1) selon l'invention, lesdites couches intérieure (24) et extérieure (23) peuvent être en une même polyoléfine, choisie, de préférence, parmi les polyéthylènes ou PE, et ledit matériau barrière peut être choisi parmi les matériaux barrière connus extrudables, et, de préférence, parmi les alcools polyvinyliques ou EVOH, mais comme déjà indiqué, l'invention n'est pas limitée à des matériaux spécifiques, si ce n'est que ces matériaux doivent être extrudables ou co-extrudables. Par ailleurs, il est également possible selon l'invention d'avoir comme matériau de structure, un matériau A pour la couche externe (23), et un matériau A', différent du précédent, pour la couche interne (25).
De préférence, ledit matériau multicouche présente une structure à 3 couches "A/B/A » où A et B désignent respectivement un couche de matériau de structure, typiquement en polyoléfine, et de préférence en PE - soit les couches intérieure (24) et extérieure (23), et une couche de matériau barrière - soit la couche interne (25), typiquement l'EVOH, la couche de matériau barrière B ayant une épaisseur moyenne comprise entre 0,02 et 0,5 mm, et de préférence, une épaisseur moyenne de 0,04 à 0,2 mm, pour une épaisseur totale de ladite structure à 3 couches typiquement de 1,2 mm.
Il a été observé qu'il n'était pas nécessaire selon l'invention d'intercaler une couche adhésive entre la couche de matériau de structure A et celle de matériau barrière B, bien que les matériaux A et B puissent ne pas adhérer l'un à l'autre, comme c'est le cas avec le PE et l'EVOH.

Par ailleurs, la couche B peut éventuellement être remplacée par plusieurs couches B de moindre épaisseur, qui se recouvrent en totalité ou en partie, avec éventuellement des couches A intercalaires.

Comme déjà indiqué, l'épaisseur globale de la couche de matériau barrière peut être modulée en fonction du niveau de performances souhaité, compte tenu de la nature du produit conditionné.

Un autre objet de l'invention est constitué par les tubes (1) qui comprennent une tête (2) selon l'invention.
De préférence, l'assemblage de ladite jupe et de ladite tête est formé par co-injection de ladite tête sur ladite jupe formée préalablement.
En effet, bien que les têtes puissent être fabriquées en tant que telles puis assemblées à des jupes, il est avantageux de procéder comme indiqué à la figure 4, c'est à dire de former la tête par injection sur une jupe, en réunissant en une seule étape la formation de la tête et l'assemblage de la tête et de la jupe, qui peut être, elle, fabriquée à part.

Un autre objet de l'invention est constitué par un procédé de fabrication d'une tête multicouche selon l'invention.
Dans ce procédé :
a) on co-injecte, dans une cavité (67) formée par la coopération d'une matrice (61) et d'un poinçon (60), et à l'aide d'une tête de co-injection (6) alimentée en matériau de structure A et en matériau barrière B, un flux de matériau de structure A pendant un temps T égal à To, et, à partir d'un temps T = t jusqu'à un temps T = To-t' un flux de matériau barrière correspondant à ladite couche interne (25), les temps t et t' étant choisi aussi petit que possible de manière à ce que, après élimination de la carotte d'injection (26), les extrémités (250,251) de ladite couche interne (25) en matériau barrière de ladite tête (2) soient totalement encapsulées par ledit matériau de structure A desdites couches intérieure et extérieure (24,23), lesdites extrémités (250,251) étant séparées du milieu extérieur par une épaisseur d'au moins 20 µm dudit matériau de structure A,
b) on poursuit l'injection dudit matériau de structure A pendant un temps complémentaire T' au moins égal à To, de manière à stabiliser la quantité de matériau de structure injectée.
   Typiquement :
   - To peut aller de 0,1 s à 1 s
   - To+T' peut aller de 1 s à 3 s
   - t peut aller de 0,01.To à 0,5.To
   - t' peut aller de 0,01.To à 0,65.To
   Ce procédé sera mieux compris en considérant les figures 3, 4, 5, 5a, 5b et 8.
   On voit bien sur la figure 8 que l'injection de matériau barrière B commence après celle du matériau de structure A et se termine avant celle du matériau A.
   Ainsi, il est clair qu'avec l'ensemble des moyens définis par l'invention, il est possible de réguler, durant tout un cycle de production T d'une tête, à la fois l'introduction de chacun des matériaux injectés, et ainsi de maîtriser d'une part les distances " e " et " e' ".
   D'autre part, ces moyens permettent aussi de modifier à volonté l'épaisseur de la couche de matériau barrière B, notamment en régulant les débits relatifs de matériau barrière B et de matériau A dans la buse (5) de co-injection.
   Un autre objet de l'invention est un procédé de fabrication de tubes ayant une tête (2) selon l'invention.
   Selon une première modalité, on peut assembler, par tout moyen connu, typiquement par tout type de soudure, une tête selon l'invention sur une jupe. Mais, de préférence, on assemble ladite tête et ladite jupe en co-injectant ladite tête sur ladite jupe, comme illustré à la figure 4.

Une unité de fabrication utilisant le procédé de l'invention a été schématisée à la figure 7. Dans ce procédé industriel, un plateau tournant ou carrousel (76) à axe de rotation vertical (77), divisé en p secteurs (71,72,73,74), p étant égal typiquement à 8, et indexé en rotation avec un pas angulaire égal à 360°/p, met en regard chaque secteur successivement avec au moins trois postes fixes décalés angulairement par rapport audit axe de rotation, avec un premier poste (71) de chargement des jupes sur ledit secteur du plateau, puis avec un second poste (72) de co-injection et surmoulage desdites têtes sur lesdites jupes, et avec un troisième poste de déchargement des tubes (74) dudit plateau, le temps de séjour d'un secteur en face de chacun des postes fixes étant égal à la somme To+T', somme de préférence allant de 1 seconde à 3 secondes, et l'intervalle de temps entre deux postes fixes étant notamment déterminé par le décalage angulaire entre ces deux postes fixes.

On a représenté à la figure 7 le cas où, p étant égal à 8, le poste de co-injection (72) et le poste de déchargement (74) sont décalés angulairement d'un angle α, typiquement égal à 180°, de manière à ce que le temps de refroidissement des tubes entre le poste de co-injection et le poste de déchargement soit sensiblement égal à (To+T').(p/360°). α.

Un autre objet de l'invention est un dispositif équipant le poste de co-injection (72). On connaît par EP 0 325 440 un dispositif de co-injection alimenté en matériau de structure A et en matériau barrière B et comprenant une buse de co-injection munie d'un orifice débouchant sur la cavité d'un moule, qui peut être alimenté soit en matériau de structure A soit en matériau multicouche A/B/A. Le dispositif est muni de moyens de commande pour assurer l'injection programmée du matériau A ou du flux annulaire de matérau A/B/A dans la cavité du moule à des moments prédéterminés du cycle de fabrication.

Pour mieux séparer les flux et ainsi mieux maîtriser les durées des différentes phases du procédé selon l'invention telles que décrites précédemment, le dispositif selon l'invention prévoit la possibilité d'alimenter en matériau de structure la cavité du moule à l'aide d'un canal qui ne traverse pas la buse de co-injection. La buse n'est alors utilisée que pour co-injecter les matériaux A et B, l'injection du matériau A seul étant effectuée par un conduit spécifique qui ne traverse pas la buse de co-injection le passage d'un type d'injection à un autre se faisant à l'aide d'une vanne à tiroir.

### EXEMPLE DE REALISATION

Toutes les figures - sauf les figures 1a et 1b - sont relatives à l'invention et illustrent l'invention.
Les têtes de tube obtenues selon les exemples sont celles des figures 2a et 2b.
En ce qui concerne les dimensions de ces têtes, ce sont les dimensions standard des têtes de tubes de dentifrice, la hauteur de la tête étant de 20 mm et le diamètre du tube étant de 35 mm.
En ce qui concerne la nature des matériaux, on a pris comme matériau de structure A le PE, et comme matériau barrière l'EVOH.
L'épaisseur de matériau multicouche au niveau de l'épaulement (21) est typiquement de 1,2 mm et les épaisseurs des couches de PE (23, 24) et de matériau barrière (25) sont de 1 mm pour la couche extérieure de PE (23), de 0,05 mm pour la couche interne d'EVOH (25), et de 0,15 mm pour la couche intérieure de PE (24).
On a obtenu des têtes avec des distances " e " et " e' " égales à 2mm.

Pour fabriquer ces têtes, on a utilisé des buses de co-injection (5) telles que celle représentée à la figure 5.
Une telle buse (5) est alimentée en PE par le conduit (633) et en EVOH par le conduit (643), et comprend des moyens de régulation et d'ouverture/fermeture desdits conduits.

Comme la quantité de PE est beaucoup plus grande que celle d'EVOH, à chaque buse (5) est associé un piston doseur (632) qui permet l'injection d'une quantité précise de PE dans ladite cavité - un clapet anti-retour (631) empêchant tout refoulement de PE. Ce piston doseur (632) est rempli en temps masqué durant le changement de tube.
La buse (5) présente un orifice (53) qui est automatiquement fermé par une vanne à tiroir (65)quand la cavité (67), formée par la coopération du poinçon (60) et de la matrice (61), n'est pas appliquée - à l'aide du piston (62) - contre l'orifice externe (66) en vue de la co-injection de PE et d'EVOH.

Avec le dispositif de l'invention représenté sur les figures 5 à 6, la buse (5) n'est utilisée que pour co-injecter les matériaux A et B, l'injection du matériau A seul étant effectuée par un conduit spécifique (634) qui ne traverse pas la buse (5), le passage d'un type d'injection à un autre se faisant à l'aide d'une vanne à tiroir (65) avec un tiroir (650) à déplacement latéral à 4 positions comme expliqué à propos des figures 5, 5a, 5b et 6.

Le déroulement d'un cycle de production d'une tête (2) est illustré à la figure 8.
La durée d'un cycle To+T', allant de 1s à 3s, est typiquement voisin de 2 s.
Afin d'assurer une grande productivité, et comme illustré à la figure 6 dans une vue en perspective, le poste de co-injection de la ligne de production utilisé pour mettre en oeuvre le procédé de l'invention comprend 6 buses (5) en parallèle, alimentées en matériau A par les conduits ou canaux d'alimentation (633) et en matériau B par les canaux (643). La tête de co-injection (6) de la figure 6 comprend, outre l'alimentation directe de la buse (5) en matériau A par les canaux (633), une alimentation en matériau A par les canaux latéraux (643).
Dans ce dernier cas, où le dispositif de co-injection comprend une alimentation parallèle en matériau, et où on a utilisé une vanne à tiroir (65) avec un tiroir (650) à 4 positions, on a représenté sur la ligne « P650 » de la figure 8 le fonctionnement au cours de deux cycles de production, chacun d'une durée de To+T'.
La durée To comprend le changement de cycle, le tiroir étant en position « 1 », où il n'y a aucun flux de matière, ce changement de cycle correspond au remplacement des cavités pleines par des cavités vides, et s'effectue un temps typiquement inférieur à 0,1 To.

En ce qui concerne la ligne de production industrielle, elle a été schématisée par une vue de dessus à la figure 7. Elle comprend un carrousel (76) ou plateau tournant autour de son axe vertical (77), divisé en 8 secteurs qui défilent successivement devant un premier poste (71) d'alimentation en jupes (3), puis devant un second poste (72) de co-injection situé angulairement à 90° (360°.2/8) du premier, puis devant un troisième poste (74) de déchargement, situé angulairement à 270° du premier, de sorte que la temps de refroidissement des têtes de tubes sur carrousel est égal à environ 4.(T+T').
La productivité de cette ligne est d'environ 10 000 tubes à l'heure sensiblement égal à 6x 3600/(To+T'), avec To+T' voisin de 2 s.

### AVANTAGES DE L'INVENTION

L'invention apporte une alternative avantageuse à l'état de la technique. En effet, comme déjà signalé, l'invention permet d'éviter l'utilisation d'inserts - inserts qui, fabriqués à part, en un matériau spécifique, jouent le rôle de matériau barrière
L'invention permet donc de résoudre tous les problèmes liés à la présence d'inserts, qu'il s'agisse de la compatibilité des matériaux et du recyclage des tubes, qu'il s'agisse de l'extension de l'insert et son effet barrière sur toute la hauteur de la tête, qu'il s'agisse encore de l'adaptation du niveau de la barrière en fonction du contenu et des conditions d'utilisation, ou qu'il s'agisse enfin du coût des tubes.
En effet, l'invention permet d'obtenir des couches d'EVOH aussi minces que possible et que nécessaire compte tenu du niveau de barrière recherché, alors qu'un insert, compte tenu notamment de sa fabrication à part et de sa manipulation doit avoir une certaine rigidité et donc une épaisseur minimum.
L'invention offre donc un moyen de portée générale pour permettre au fabricant de tubes de répondre à la plupart des exigences, notamment réglementaires ou législatives, relatives aux matériaux des tubes et à leur recyclage.

| LISTE DES REPERES | |
|---|---|
| TUBE | 1 |
| AXE DE SYMETRIE DU TUBE | 10 |
| TETE DE TUBE | 2 |
| GOULOT | 20 |
| ORIFICE | 200 |
| FILETAGE | 201 |
| REBORD SUPERIEUR | 202 |
| EPAULEMENT | 21 |
| ZONE DE RACCORDEMENT A LA JUPE | 22 |
| COUCHE EXTERIEURE | 23 |
| COUCHE INTERIEURE | 24 |
| COUCHE INTERNE (BARRIERE) | 25 |
| EXTREMITE HAUTE DE LA C.B. | 250 |
| EXTREMITE BASSE DE LA C.B. | 251 |
| " CAROTTE D'INJECTION " | 26 |
| | |
| JUPE | 3 |
| MATERIAU BARRIERE | 30 |
| COUCHE EXTERNE | 31 |
| COUCHE INTERNE | 32 |
| INSERT DE L'ETAT DE LA TECHNIQUE | 4 |
| | |
| BUSE DE COINJECTION | 5 |
| CANAL CENTRAL (matériau A) | 50 |
| CONDUIT ANNULAIRE MEDIAN (B) | 51 |
| CONDUIT ANNULAIRE EXTERNE (A) | 52 |
| ORIFICE/CONDUIT COMMUN | 53 |
| | |
| TETE DE COINJECTION | 6 |
| POINCON | 60 |
| MATRICE | 61 |
| PETIT PISTON | 62 |
| VIS EXTRUDEUSE de matériau A. | 63 |
| REPARTITEUR de matériau A | 630 |
| CLAPET ANTI-RETOUR | 631 |
| PISTON D'INJECTION | 632 |
| CANAL D'ALIMENTATION (A) | 633 |
| CANAL LATERAL (A) | 634 |
| VANNE (A) | 635 |
| VIS EXTRUDEUSE de matériau B | 64 |
| REPARTITEUR de matériau B | 640 |
| CANAL D'ALIMENTATION (B) | 643 |
| VANNE (B) | 644 |
| VANNE à TIROIR à 4 positions | 65 |
| TIROIR MOBILE | 650 |
| ORIFICE ANNULAIRE | 66 |
| CAVITE entre tête de poinçon et matrice | 67 |
| PURGE | 68 |
| UNITE DE FABRICATION DE TUBES | 7 |
| ALIMENTATION EN JUPES | 70 |
| POSTE D'ALIMENTATION | 71 |
| POSTE DE COINJECTION | 72 |
| POSTE DE REFROIDISSEMENT | 73 |
| POSTE DE DECHARGEMENT | 74 |
| TRANSFERT DE TUBES | 75 |
| PLATEAU OU CARROUSEL | 76 |
| AXE VERTICAL DU PLATEAU | 77 |

## Revendications

1. Tête de tube (2) en matière plastique, destinée à être assemblée à une jupe (3) pour former un tube (1), comprenant un goulot (20), typiquement fileté, et un épaulement (21) comprenant une portion annulaire (22) de raccordement à ladite jupe, **caractérisée en ce que**,
a) ladite tête (2) est formée par co-injection et comprend un matériau multicouche thermoplastique comprenant une couche intérieure (24), une couche extérieure (23) en matériau de structure A, et au moins une couche interne (25) en un matériau barrière B,
b) ladite couche interne (25) est enrobée par lesdites couches intérieure (24) et extérieure (23), y compris aux extrémités de ladite tête où lesdites couches intérieure et extérieure sont réunies en une couche, la distance " e " et " e' " entre chacune des extrémités (250,251) de ladite couche interne et l'extrémité correspondante de ladite tête étant comprise entre 0,02 mm et 5 mm, de manière à ce que ladite couche interne en matériau barrière (25) s'étende sur la plus grande hauteur possible, tout en ayant ses extrémités enrobées ou encapsulées par la jonction desdites couches intérieure (24) et extérieure (23).

2. Tête selon la revendication 1 dans laquelle lesdites couches intérieure et extérieure sont en un même matériau barrière A, typiquement une polyoléfine choisie parmi le PE et le PP.

3. Tête selon la revendication 2 dans laquelle ledit matériau barrière B est choisi typiquement parmi les alcools polyvinyliques ou EVOH.

4. Tête selon la revendication 3 dans laquelle ledit matériau multicouche présente une structure à au moins 3 couches " A/B/A ", où A et B désignent respectivement une couche de matériau de structure, typiquement le PE, et une couche de matériau barrière, typiquement de l'EVOH, la couche de matériau barrière ayant une épaisseur moyenne comprise entre 0,02 et 0,5 mm.

5. Tube comprenant une tête selon une quelconque des revendications 1 à 4.

6. Tube selon la revendication 5 dans lequel l'assemblage de ladite jupe et de ladite tête est formé par co-injection de ladite tête (2) sur ladite jupe (3) formée préalablement.

7. Procédé de fabrication d'une tête de tube (2) selon une quelconque des revendications 1 à 4 dans lequel :
a) on co-injecte dans une cavité (67) formée par coopération d'une matrice (61) et d'un poinçon (60), et à l'aide d'une tête de co-injection (6) alimentée en matériaux de structure A, typiquement une polyoléfine, et en matériau barrière B, un flux de matériaux de structure pendant un temps T égal à To, et, à partir d'un temps T = t jusqu'à un temps T = To-t', un flux de matériau barrière correspondant à ladite couche interne de matériau barrière, les temps t et t' étant choisi aussi petit que possible de manière à ce que, après élimination de la carotte d'injection (26), les extrémités (250,251) de ladite couche en matériau barrière B de ladite tête multicouche soit totalement encapsulée par ledit matériau de structure A desdites couches intérieure et extérieure, ces extrémités étant séparées du milieu extérieur par une épaisseur d'au moins 20 µm dudit matériau de structure A,
b) on poursuit typiquement l'injection dudit matériau de structure pendant un temps complémentaire T' au moins égal à To, de manière à stabiliser la quantité de matériau de structure injectée.

8. Procédé de fabrication selon la revendication 7 dans lequel :
- To vade 0, 1s à 1s,
- To+T' va de 1s à 3s,
- t va de 0,01.To à 0,1.To,
- t' va de 0,02.To à 0,2.To.

9. Procédé de fabrication de tubes (1) dans lequel on assemble sur une jupe (3) une tête de tube (2) fabriquée selon le procédé selon une quelconque des revendications 7 à 8, typiquement par soudure.

10. Procédé selon la revendication 9 dans lequel on assemble ladite tête de tube (2) et ladite jupe (3) en co-injectant ladite tête (2) sur ladite jupe (3).

11. Procédé selon une quelconque des revendications 7 à 10 dans lequel on fabrique simultanément n têtes de tube (2), n étant typiquement compris entre 2 et 16, à l'aide de n têtes d'injection (6), alimentées en matériau de structure A à l'aide d'une extrudeuse (63) de matériau A et d'un répartiteur à n branches (630), et alimentées en matériau barrière B à l'aide d'une extrudeuse (64) de matériau B et d'un répartiteur à n branches (640).

12. Procédé de fabrication selon une quelconque des revendications 10 ou 11 dans lequel un plateau tournant ou carrousel (76) à axe de rotation vertical (77), divisé en p secteurs (71,72,73,74), p étant égal typiquement à 8, et indexé en rotation avec un pas angulaire égal à 360°/p, met en regard chaque secteur successivement avec au moins trois postes fixes décalés angulairement par rapport audit axe de rotation, avec un premier poste (71) de chargement des jupes sur ledit secteur du plateau, puis avec un second poste (72) de co-injection et surmoulage desdites têtes sur lesdites jupes, et avec un troisième poste de déchargement des tubes (74) dudit plateau, le temps de séjour d'un secteur en face de chacun des postes fixes étant égal à la somme To+T', somme de préférence allant de 1 s à 3 s, et l'intervalle de temps entre deux postes fixes étant notamment déterminé par le décalage angulaire entre ces deux postes fixes.

13. Procédé selon la revendication 12 dans lequel, p étant égal à 4, le poste de co-injection (72) et le poste de déchargement (74) sont décalés angulairement d'un angle α, typiquement égal à 180°, de manière à ce que le temps de refroidissement des tubes entre le poste de co-injection et le poste de déchargement soit sensiblement égal à (To+T').(p/360°). α.

14. Dispositif pour la fabrication de têtes de tube ou de tubes, par mise en oeuvre du procédé de co-injection selon une quelconque des revendications 7 à 13, comprenant de 1 à n têtes de co-injection (6) selon le nombre n de têtes de tubes (2) à co-injecter simultanément dans 1 à n cavités correspondantes (67), dans lequel :
a) chaque tête de co-injection (6) est alimentée en matériau de structure A et en matériau barrière B,
b) chaque tête comprend un orifice annulaire (66), débouchant sur ladite cavité (67), qui peut être alimenté alternativement en matériau A par un canal (634), ou en un flux annulaire de matériau A/B/A par l'orifice (53) d'une buse de co-injection (5) alimentée en matériaux A et B, et
c) chaque tête comprend un moyen pour assurer l'injection programmée du matériau A ou dudit flux A/B/A dans ladite cavité (67), à des moments prédéterminés du cycle de fabrication,
**caractérisé en ce que** le canal (634) permettant d'injecter le matériau A seul ne traverse pas ladite buse de co-injection (5), le passage d'un type d'injection à un autre se faisant à l'aide d'une vanne à tiroir (65).

15. Dispositif selon la revendication 14 dans lequel ladite vanne à tiroir présente 4 positions :
1 : fermeture de l'orifice (53) et du canal (634) : aucun matériau ne s'écoule,
2 : mise en communication du canal (634) et de la cavité (67) : injection du matériau A dans la cavité (67),
3 : mise en communication de l'orifice (53) et de la cavité (67) : injection du flux annulaire de matériau multicouches A/B/A,
4 : mise en communication de l'orifice (53) avec l'extérieur : purge éventuelle de l'orifice (53).

## Claims

1. A tube head (2) made of plastic material intended to be assembled from a skirt (3) to form a tube (1) comprising a neck (10), typically threaded, and a shoulder flange (21) comprised of an annular part (22) for connecting said skirt, **characterized in that**
a) said head (2) is formed by co-injection and comprises a multi-layered thermoplastic material comprising an inner layer (24), an outside layer (23) made of the structural material A and at least one internal layer (25) made of a barrier material B;
b) said internal layer (25) is lined by said inner layer (24) and outer layer (23) including at the ends of said head where said inner and outer layers are combined into one layer, the distance "e" and "e'" between each of the ends (250, 251) of said inner layer and the corresponding end of said head being between 0.02 mm and 5 mm in such a manner that said internal layer made of barrier material (25) extends over the greatest height possible while having its ends lined or encapsulated by the junction of said inner (24) and outer (23) layers.

2. A head according to Claim 1, wherein said inner and outer layers are made of one and the same barrier material A, typically a polyolefin chosen from between PE and PP.

3. A head according to Claim 2 in which said barrier material B is chosen typically from among the polyvinyl alcohols or EVOH.

4. A head according to Claim 3, in which said multilayer material has a structure of at least three layers "A/B/A", where A and B define, respectively, one layer of structural material, typically PE, and one layer of barrier material, typically EVOH, the barrier material layer having an average thickness of between 0.02 and 0.5 mm.

5. A tube comprising a head according to any one of Claims 1 to 4.

6. A tube according to Claim 5, in which the assembly of said head is formed by co-injection of said head (2) onto said previously formed skirt (3).

7. A method for manufacturing a tube head (2) according to any one of Claims 1 to 4, wherein:
a) a flux of structural material is co-injected into a cavity (67) and, with the aid of a co-injection head (6) supplied with structural material A, typically a polyolefin, and with barrier material B, over a time T equal to T₀, and a starting at a time T =t up to a time T = T_{0-T'} a flow or barrier material corresponding to said internal layer of barrier material, the times t and t' being chosen to be as short as possible so that, after removal of the injection sprue (26), the ends (250, 251) of said barrier material layer of said multi-layered head are completely encapsulated by said structural material A of said inner and outer layers, the ends being separated from the external environment by a thickness of at least 20 µ of said structural material A.
b) typically the injection of said structural material is continued over a complementary period T' at least equal to T₀ in order to stabilize the quantity of structural material injected.

8. A manufacturing method according to Claim 7, wherein:
- T₀ runs from 0.1 s to 1 s,
- T₀ + T' runs from 1 s to 3 s,
- t runs from 0.01·T₀ to 0.1·T₀,
- t' runs from 0.02·T₀ to 0.2·T₀.

9. A manufacturing method for tubes (1) in which a tube head (2) manufactured according to the method described in any one of Claims 7 to 8 is assembled on a skirt (3), typically by welding.

10. A method according to Claim 9, wherein said tube head (2) and said skirt (3) are assembled by co-injecting said head (2) onto said skirt (3).

11. A method according to any one of Claims 7 to 10, wherein ***n*** tube heads (2 are simultaneously manufactured, where ***n*** is typically between 2 and 16, with the aid of ***n*** injection heads (6) supplied with structural material A using an extruder (63) of material A and a distribution apparatus having ***n*** branches (630), and supplied with barrier material B using an extruder (64) of material B and a distribution apparatus having ***n*** branches (640).

12. A manufacturing method according to any one of Claims 10 to 11 in which a plate or carrousel (76) rotating on a vertical axis of rotation (77) is divided into ***p*** sectors (71, 72, 73, 74), ***p*** being equal typically to 8 and indexed in rotation with an angular pitch equal to 360° / p, places each sector in succession relative to at least three fixed stations offset at an angle relative to said axis of rotation, with a first station (71) for charging the skirts on said plate sector, then with a second station (72) for co-injection and super-molding of said heads onto said skirts, and with a third station (74) for discharging the tubes from said plate, the holding time of a sector at each of the fixed stations being equal to the sum T₀ + T', the preferred sum being from 1 s to 3 , and the time interval between two fixed stations being determined by the angular offset between these two fixed stations.

13. A method according to Claim 12, wherein ***p*** being equal to 4, the co-injection station (72) and the discharging station (74) are angularly offset by an angle α typically equal to 180° in such a manner that the cool-down time of the tubes between the co-injection station and the discharging station is substantially equal to (Tₒ + T')·(p / 360°)·α.

14. A device for manufacturing tube heads or tubes by implementing the co-injection method according to any one of Claims 7 to 13 comprising 1 to ***n*** co-injection heads (6) according to the number ***n*** of tube heads (2) to be co-injected simultaneously in 1 to ***n*** corresponding cavities (67), wherein:
a) each head is supplied with structural material A and barrier material B;
b) each head includes and annular orifice (66) opening onto said cavity (67) which can be supplied alternatively with material A through a conduit (634) or with an annular flux of A/B/A material through the opening (53) of a co-injection nozzle (5) supplied with materials A and B and
c) each head comprises a means to assure the programmed injection of material A or said A/B/A flux into said cavity (67), at predetermined moments in the manufacturing cycle, **characterized in that**:
the conduit (634) providing injection of the material A alone does not cross said co-injection nozzle (5), the passage of one type of injection to another being accomplished with the aid of a slide valve (65).

15. A device according to Claim 14, wherein said vanne a tiroir has 4 positions:
1: closure of the opening (53) and of the conduit (634): no material flows;
2: connection of the conduit (634) and the cavity (67): injection of material A into the cavity (67) ;
3: connection of the opening (53) and the cavity (67): injection of the annular flux of multiple layer material A/B/A;
4: connection of the opening (53) to the outside: eventual purging of the opening (53).

## Patentansprüche

1. Tubenkopf (2) aus Kunststoff, der zur Bildung einer Tube (1) mit einem Tubenmantel (3) verbunden werden soll, umfassend einen Tubenhals (20), welcher typischerweise mit einem Gewinde versehen ist, und eine Tubenschulter (21), welche einen ringförmigen Abschnitt (22) zum Verbinden mit dem Tubenmantel aufweist, **dadurch gekennzeichnet, dass**
a) der Tubenkopf (2) durch Coinjektion gebildet wird und einen thermoplastischen Mehrschichtenwerkstoff aufweist, der eine innere Schicht (24), eine äußere Schicht (23) aus einem Strukturwerkstoff A und mindestens eine interne Schicht (25) aus einem Sperrwerkstoff B umfasst,
b) die interne Schicht (25) von der inneren (24) und äußeren Schicht (23) umhüllt ist, einschließlich an den Enden des Tubenkopfes, wo die innere und die äußere Schicht zu einer Schicht vereinigt sind, wobei der Abstand " e " und " e' " zwischen jedem der Enden (250, 251) der internen Schicht und dem entsprechenden Ende des Tubenkopfes 0,02 bis 5 mm beträgt, so dass sich die interne Schicht (25) aus dem Sperrwerkstoff über die größtmögliche Höhe erstreckt und ihre Enden dabei von der Verbindung der inneren (24) und äußeren Schicht (23) umhüllt oder umkapselt sind.

2. Tubenkopf gemäß Anspruch 1, bei dem die innere und die äußere Schicht aus einem gleichen Sperrwerkstoff A sind, typischerweise ein unter PE und PP gewähltes Polyolefin.

3. Tubenkopf gemäß Anspruch 2, bei dem der Sperrwerkstoff B typischerweise unter den Polyvinylalkoholen oder EVOH gewählt ist.

4. Tubenkopf gemäß Anspruch 3, bei dem der Mehrschichtenwerkstoff ein Gefüge mit mindestens 3 Schichten " A/B/A " aufweist, wo A und B jeweils eine Schicht aus Strukturwerkstoff, typischerweise PE, und eine Schicht aus Sperrwerkstoff, typischerweise EVOH, bezeichnen, wobei die Schicht aus Sperrwerkstoff eine durchschnittliche Stärke von 0,02 bis 0,5 mm hat.

5. Tube mit einem Tubenkopf gemäß einem der Ansprüche 1 bis 4.

6. Tube gemäß Anspruch 5, bei der die Verbindung von Tubenmantel und Tubenkopf durch Coinjektion des Kopfes (2) auf den vorher ausgebildeten Mantel (3) gebildet wird.

7. Verfahren zur Herstellung eines Tubenkopfes (2) gemäß einem der Ansprüche 1 bis 4, bei dem:
a) in eine Kavität (67), die durch Zusammenwirken einer Matrize (61) und eines Stempels (60) gebildet wird, mit Hilfe eines Coinjektionskopfes (6), der mit Strukturwerkstoffen A, typischerweise ein Polyolefin, und einem Sperrwerkstoff B gespeist wird, ein Strukturwerkstoffstrom während einer Zeit T gleich To und ab einer Zeit T = t bis zu einer Zeit T = To-t' ein der internen Schicht aus Sperrwerkstoff entsprechender Sperrwerkstoffstrom eingespritzt wird, wobei die Zeiten t und t' so klein wie möglich gewählt werden, damit die Enden (250, 251) der Schicht aus dem Sperrwerkstoff B des mehrschichtigen Tubenkopfes nach Entfernen des Gusszapfens (26) vollständig von dem Strukturwerkstoff A der inneren und äußeren Schicht umkapselt sind, wobei diese Enden durch eine Wanddicke von mindestens 20 um des Strukturwerkstoffes A von der äußeren Umgebung getrennt sind,
b) die Einspritzung des Strukturwerkstoffes während einer zusätzlichen Zeit T, die mindestens gleich To ist, typischerweise fortgesetzt wird, um die eingespritzte Strukturwerkstoffmenge zu stabilisieren.

8. Herstellungsverfahren gemäß Anspruch 7, bei dem:
- To zwischen 0,1 s und 1 s liegt,
- To+T' zwischen 1 s und 3 s liegt,
- t zwischen 0,01.To und 0,1.To liegt,
- t' zwischen 0,02.To und 0,2.To liegt.

9. Verfahren zur Herstellung von Tuben (1), bei dem auf einen Tubenmantel (3) ein gemäß dem Verfahren nach einem der Ansprüche 7 bis 8 hergestellter Tubenkopf (2) aufgebracht wird, typischerweise durch Schweißen.

10. Verfahren gemäß Anspruch 9, bei dem der Tubenkopf (2) und der Tubenmantel (3) durch Coinjektion des Kopfes (2) auf den Mantel (3) miteinander verbunden werden.

11. Verfahren gemäß einem der Ansprüche 7 bis 10, bei dem n Tubenköpfe (2), wobei n typischerweise zwischen 2 und 16 liegt, mit Hilfe von n Injektionsköpfen (6) gleichzeitig hergestellt werden, welche Injektionsköpfe mit einem Strukturwerkstoff A mit Hilfe eines Extruders (63) für den Werkstoff A und eines Verteilers mit n Zweigen (630) und mit einem Sperrwerkstoff B mit Hilfe eines Extruders (64) für den Werkstoff B und eines Verteilers mit n Zweigen (640) gespeist werden.

12. Herstellungsverfahren gemäß einem der Ansprüche 10 oder 11, bei dem ein Drehteller oder Karussell (76) mit vertikaler Drehachse (77), der in p Sektoren (71, 72, 73, 74) unterteilt ist, wobei p typischerweise gleich 8 ist, und sich um einen festgelegten Teilungswinkel gleich 360°/p dreht, nacheinander jeden Sektor vor mindestens drei zur Drehachse winkelversetzte ortsfeste Stationen führt, vor eine erste Station (71) zum Laden der Tubenmäntel auf den Sektor des Drehtellers, dann vor eine zweite Station (72) zum Koinjizieren und Vergießen der Köpfe und Mäntel und vor eine dritte Station (74) zum Entladen der Tuben vom Drehteller, wobei die Verweilzeit eines Sektors vor jeder der ortsfesten Stationen gleich der Summe To+T' ist, wobei die Summe zwischen 1 s und 3 s liegt, und wobei der Zeitraum zwischen zwei ortsfesten Stationen insbesondere durch die Winkelversetzung zwischen diesen beiden ortsfesten Stationen bestimmt ist.

13. Verfahren gemäß Anspruch 12, bei dem, mit p gleich 4, die Coinjektionsstation (72) und die Entladestation (74) um einen Winkel α von typischerweise 180° zueinander winkelversetzt sind, so dass die Abkühlungszeit der Tuben zwischen der Coinjektionsstation und der Entladestation im wesentlichen gleich (To+T').(p/360°).α ist.

14. Vorrichtung zur Herstellung von Tubenköpfen oder Tuben vermittels Durchführung des Coinjektionsverfahrens gemäß einem der Ansprüche 7 bis 13, umfassend 1 bis n Coinjektionsköpfe (6) je nach der Zahl n der gleichzeitig in 1 bis n entsprechende Kavitäten (67) einzuspritzenden Tubenköpfe (2), bei der:
a) jeder Coinjektionskopf (6) mit einem Strukturwerkstoff A und einem Barrierewerkstoff B gespeist wird,
b) jeder Kopf eine in die Kavität (67) einmündende ringförmige Öffnung (66) aufweist, die abwechselnd mit dem Werkstoff A über einen Kanal (634) oder mit einem ringförmigen A/B/A-Werkstoffstrom über die Öffnung (53) einer mit den Werkstoffen A und B gespeisten Coinjektionsdüse (5) gespeist wird, und
c) jeder Kopf ein Mittel aufweist, um das programmierte Einspritzen des Werkstoffes A oder des A/B/A-Werkstoffstroms in die Kavität (67) zu vorbestimmten Zeitpunkten des Herstellungszyklus sicherzustellen,
**dadurch gekennzeichnet, dass** der Kanal (634) zum alleinigen Einspritzen des Werkstoffes A die Coinjektionsdüse (5) nicht durchquert, wobei der Übergang von einer Einspritzart zur anderen mit Hilfe eines Schieberventils (65) erfolgt.

15. Vorrichtung gemäß Anspruch 14, bei der das Schieberventil vier Stellungen aufweist:
1: Verschluss der Öffnung (53) und des Kanals (634): es fliesst kein Werkstoff,
2. Verbindung des Kanals (634) mit der Kavität (67): Einspritzen des Werkstoffes A in die Kavität (67),
3. Verbindung der Öffnung (53) mit der Kavität (67): Einspritzen des ringförmigen Materialstroms aus dem A/B/A-Mehrschichtenwerkstoff,
4. Verbindung der Öffnung (53) nach außen: eventuelles Ausblasen der Öffnung (53).
